# EUROPÄISCHE PATENTANMELDUNG

(11) **EP 4 835 340 A1**
(43) Veröffentlichungstag der Anmeldung: **04.11.2026**
(21) Anmeldenummer: 26173916.3
(22) Anmeldetag: 22.04.2026
(51) Int. Cl.: F16L 37/248, F16L 17/073, F16L 37/252, F16L 55/07

(54) **KUPPLUNGSELEMENT FÜR EINE FLUIDKUPPLUNG SOWIE ENTSPRECHENDE FLUIDKUPPLUNG**

(30) Priorität: 30.04.2025 DE 102025116693
(71) Anmelder: Karasto Armaturenfabrik Oehler GmbH, 71522 Backnang (DE)
(72) Erfinder: Bujara, Thomas, 74248 Ellhofen (DE); Rödling, David, 74522 Backnang (DE)
(74) Vertreter: Gleiss Große Schrell und Partner mbB

(57) **Zusammenfassung**

Die Erfindung betrifft ein Kupplungselement (1) für eine Fluidkupplung, mit Kopplungsmitteln (3) zum reversiblen Koppeln des Kupplungselements (1) mit einem Kupplungsgegenelement der Fluidkupplung und mit einem in einem Kupplungskörper (2) des Kupplungselements (1) angeordneten Dichtring (7) zur Abdichtung einer Fluidverbindung bei mit dem Kupplungsgegenelement gekoppeltem Kupplungselement (1), wobei der Dichtring (7) zumindest zeitweise an einer Wandfläche (12) des Kupplungskörpers (2) dichtend anliegt. Dabei ist vorgesehen, dass an dem Kupplungskörper (2) ein Bedienelement (24) verlagerbar gelagert ist, das in mindestens einer Stellung den Dichtring (7) zur Herstellung einer Undichtigkeit der Fluidverbindung von der Wandfläche (12) des Kupplungskörpers (2) fortdrängt. Die Erfindung betrifft weiterhin eine Fluidkupplung mit einem Kupplungselement (1) und einem Kupplungsgegenelement.

## Beschreibung

Die Erfindung betrifft ein Kupplungselement für eine Fluidkupplung, mit Kopplungsmitteln zum reversiblen Koppeln des Kupplungselements mit einem Kupplungsgegenelement der Fluidkupplung und mit einem in einem Kupplungskörper des Kupplungselements angeordneten Dichtring zur Abdichtung einer Fluidverbindung bei mit dem Kupplungsgegenelement gekoppeltem Kupplungselement, wobei der Dichtring zumindest zeitweise an einer Wandfläche des Kupplungskörpers dichtend anliegt. Die Erfindung betrifft weiterhin eine Fluidkupplung.

Aus dem Stand der Technik ist zum Beispiel die Druckschrift DE 10 2022 207 365 A1 bekannt. Diese beschreibt ein Kupplungselement für eine Fluidkupplung, mit Kopplungsmitteln zum reversiblen Koppeln des Kupplungselements mit einem Kupplungsgegenelement der Fluidkupplung und mit einem Dichtring zur Abdichtung einer Fluidverbindung bei mit dem Kupplungsgegenelement gekoppeltem Kupplungselement, wobei der Dichtring in einem Kupplungskörper des Kupplungselements drehbar angeordnet ist. Dabei ist vorgesehen, dass ein Grundkörper des Dichtrings bezüglich einer Längsmittelachse des Kupplungskörpers mit Spiel in axialer Richtung in einer in dem Kupplungskörper ausgestalteten Dichtungsaufnahme angeordnet ist und von dem Grundkörper in axialer Richtung eine elastische Dichtlippe ausgeht, die in radialer Richtung nach innen geneigt ist und über die sich der Dichtring zumindest zeitweise an einer die Dichtungsaufnahme in axialer Richtung begrenzenden Stützwand abstützt.

Weiterhin offenbart die Druckschrift US 3,758,137 ein Kupplungselement mit einem Körper und einer Dichtung, wobei der Körper einen Durchflusskanal und an seinem einen Ende Mittel zum Befestigen des Körpers an einem anderen Kupplungselement aufweist, und auch einen inneren Flansch an dem einen Ende hat, wobei eine Ausnehmung axial innerhalb des Flanschs ein durch den Flansch gebildetes Ende hat, und sein anderes Ende durch eine Querschulter gebildet ist, die von dem Flansch axial nach innen beabstandet ist, wobei die Dichtung aus verformbarem Material besteht, eine Bohrung durch sie hindurch aufweist und an ihrem äußeren Ende eine Nut hat, die den Flansch aufnimmt, um die Dichtung an dem Körper zu halten.

Beide Seiten der Nut stehen im Wesentlichen über ihre gesamte radiale Länge in Kontakt mit dem Flansch, wobei die Dichtung ein kegelstumpfförmiges äußeres Ende axial außerhalb des Flansch und ein inneres Ende aufweist, dass sich in der Ausnehmung erstreckt, und wobei der innere Rand des inneren Endes anfänglich axial von der Schulter beabstandet ist und der innere Rand durch Schwenken der Dichtung um den Flansch bei Druckkontakt des äußeren Endes mit dem anderen Kupplungselement in Kontakt mit der Schulter auslenkbar ist.

Weiterhin beschreibt die Druckschrift EP 3 1 76485 B1 eine Kupplungsvorrichtung mit Sicherheitsventilfunktion, die Röhren, wie beispielsweise Schläuche oder Rohre, miteinander verbindet oder Röhren mit einer anderen Vorrichtung verbindet, und folgendes umfasst: einen Kupplungskörper mit einem Befestigungsabschnitt, der an einem axialen Ende des Kupplungskörpers gebildet ist und an dem die Röhren oder die andere Vorrichtung angebracht ist, und einen Fluidkanal, der innerhalb des Kupplungskörpers ausgebildet ist; ein Kupplungsteil mit einem Anbringungsabschnitt, der an einem axialen Ende des Kopplungsteils ausgebildet ist und an dem Kupplungskörper angebracht ist, und einem Kopplungsabschnitt, der an dem anderen Ende des Kopplungsteils ausgebildet ist und dazu ausgebildet ist, mit einem Kopplungs-Gegenstück verbunden zu werden; und ein Dichtelement, das an dem anderen axialen Ende des Kupplungskörpers vorgesehen ist und das dazu ausgebildet ist, einen Spalt mit einem Dichtungselement eines Kopplung-Gegenstücks zwischen der Kopplungsvorrichtung und dem Kopplungs-Gegenstück zu schließen.

Es ist vorgesehen, dass die Kupplungsvorrichtung weiter einen Verformungsabschnitt aufweist, der in dem Kupplungsteil vorliegt und dazu ausgebildet ist, einen Kopplungszustand mit dem Kopplungs-Gegenstück zu erhalten, bis ein Austrittsweg zwischen dem Dichtelement und dem Dichtelement des Kopplung-Gegenstücks gebildet ist, wenn der Verformungsabschnitt durch eine axiale Zugkraft axial gestreckt wird, wobei die Zugkraft auf das Kupplungsteil wirkt, wenn der Druck eines Fluids innerhalb des Kupplungskörpers außergewöhnlich zunimmt und das Dichtelement sich von dem Dichtelement des Kopplungs-Gegenstücks trennt, um das Fluid nach außen abzuführen.

Es ist Aufgabe der Erfindung, ein Kupplungselement für eine Fluidkupplung bereitzustellen, welches gegenüber bekannten Kupplungselementen Vorteile aufweist, insbesondere hervorragende Dichtungseigenschaften aufweist und sowohl ein schnelles und einfaches Koppeln des Kupplungselements mit dem Kupplungsgegenelement ermöglicht sowie ein rasches Lösen des Kupplungselements von dem Kupplungsgegenelement sicherstellt.

Dies wird erfindungsgemäß mit einem Kupplungselement für eine Fluidkupplung mit den Merkmalen des Anspruchs 1 erreicht. Dabei ist vorgesehen, dass an dem Kupplungskörper ein Bedienelement verlagerbar gelagert ist, das in mindestens einer Stellung den Dichtring zur Herstellung einer Undichtigkeit der Fluidverbindung von der Wandfläche des Kupplungskörpers fortdrängt.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Das Kupplungselement ist vorzugsweise Bestandteil der Fluidkupplung, kann jedoch selbstverständlich auch separat von der Fluidkupplung vorliegen, insbesondere bis zu einem Koppeln des Kupplungselements mit dem Kupplungsgegenelement. Die Fluidkupplung dient bevorzugt zum Herstellen einer fluiddichten Verbindung zweier Fluidleitungen, also einer ersten Fluidleitung und einer zweiten Fluidleitung. Die Fluidleitungen können dabei grundsätzlich beliebig ausgestaltet sein. Beispielsweise liegen eine oder mehrere der Fluidleitungen jeweils als Schlauchleitung oder als Rohrleitung vor. Die Rohrleitung zeichnet sich gegenüber der Schlauchleitung durch ihre starre Ausgestaltung aus, wohingegen die Schlauchleitung flexibel ist. Anders ausgedrückt ist die Schlauchleitung flexibler als die Rohrleitung.

Die Fluidkupplung verfügt zur Herstellung der fluiddichten Verbindung zwischen der ersten Fluidleitung und der zweiten Fluidleitung über das Kupplungselement und das Kupplungsgegenelement. Das Kupplungselement ist beispielsweise der ersten Fluidleitung zugeordnet und strömungstechnisch mit ihr verbindbar oder verbunden. Zusätzlich oder alternativ ist das Kupplungsgegenelement der zweiten Fluidleitung zugeordnet und strömungstechnisch mit ihr verbindbar oder verbunden. Die Verbindung zwischen der ersten Fluidleitung und dem Kupplungselement beziehungsweise zwischen der zweiten Fluidleitung und dem Kupplungsgegenelement kann grundsätzlich auf beliebige Art und Weise hergestellt werden, beispielsweise durch Verklemmen, Verschrauben, Verschweißen, Verlöten oder dergleichen.

Insgesamt ist die Fluidverbindung zwischen den beiden Fluidleitungen über die Fluidkupplung, genauer gesagt über das Kupplungselement und das Kupplungsgegenelement, hergestellt. Hierzu ist die erste Fluidleitung strömungstechnisch an das Kupplungselement und die zweite Fluidleitung an das Kupplungsgegenelement angeschlossen und das Kupplungselement sowie das Kupplungsgegenelement zur Herstellung der Fluidverbindung miteinander gekoppelt. Nach der Kopplung des Kupplungselements mit dem Kupplungsgegenelement liegt die Fluidverbindung zwischen den beiden Fluidleitungen über das Kupplungselement und das Kupplungsgegenelement hergestellt. Die erste Fluidleitung und die zweite Fluidleitung sind vorzugsweise beabstandet voneinander angeordnet, sodass keine unmittelbare Verbindung, insbesondere keine unmittelbare Fluidverbindung, zwischen ihnen vorliegt, vorzugweise auch bei mit dem Kupplungsgegenelement gekoppeltem Kupplungselement. Vielmehr ist die Verbindung beziehungsweise Fluidverbindung ausschließlich über die Fluidkupplung und folglich über das Kupplungselement und das Kupplungsgegenelement realisiert.

Das Kupplungselement verfügt über die Kopplungsmittel, die zur mechanischen Kopplung des Kupplungselements mit dem Kupplungsgegenelement vorgesehen und ausgestaltet sind. Beispielsweise wirken die Kopplungsmittel zum Befestigen des Kupplungselements und des Kupplungsgegenelements aneinander mit Kopplungsgegenmitteln des Kupplungsgegenelements zusammen beziehungsweise sind für ein solches Zusammenwirken vorgesehen und ausgestaltet. Grundsätzlich können die Kopplungsmittel beliebig ausgestaltet sein. Beispielsweise liegen sie in Form von Bajonettkopplungsmitteln vor. Die Kopplungsgegenmittel sind jemals analog zu den Kopplungsmitteln ausgeführt und bildet ein Gegenstück zu diesen. Im Falle der Bajonettkopplungsmittel liegen sie folglich als Bajonettkopplungsgegenmittel vor. Die Bajonettkopplungsmittel und die Bajonettkopplungsgegenmittel bilden zusammen einen Bajonettverschluss, mittels welchem das Kupplungselement mit dem Kupplungsgegenelement reversibel koppelbar ist.

Der Dichtring dient zur Abdichtung der Fluidverbindung zwischen dem Kupplungselement und dem Kupplungsgegenelement. Insbesondere liegt der Dichtring nach dem Koppeln von Kupplungselement und Kupplungsgegenelement aneinander dichtend an dem Kupplungsgegenelement oder an einem an dem Kupplungsgegenelement angeordneten weiteren Dichtring an. Der Dichtring und - optional - der weite Dichtring umgreifen jeweils einen Fluidraum, über den die Fluidverbindung verläuft. Die jeweilige Fluidraum ist in radialer Richtung nach außen von dem entsprechenden Dichtring begrenzt. Ein Fluid, mit welchem das Kupplungselement beaufschlagt wird, durchströmt also den von dem Dichtring begrenzten Fluidraum in Richtung des Kupplungsgegenelements. Anschließend tritt es in das Kupplungsgegenelement oder in den von dem weiteren Dichtring begrenzten Fluidraum ein. Auch die umgekehrte Strömungsrichtung kann selbstverständlich vorgesehen sein.

Der Dichtring ist separat von dem Kupplungskörper ausgestaltet und liegt materialuneinheitlich zu diesem vor, besteht also aus einem anderen Material als der Kupplungskörper. Vorzugweise besteht der Dichtring aus einem Dichtungsmaterial, zum Beispiel Acrylnitril-Butadien-Kautschuk (NBR), Ethylen-Propyläen-Dien-Kautschuk (EPDM) oder Polytetrafluorethylen (PTFE). Das Kupplungselement und das Kupplungsgegenelement sind bevorzugt - zumindest im Vergleich mit dem Dichtring - starr ausgebildet und bestehen insoweit aus einem Material, welches eine höhere Steifigkeit aufweist als das Material des Dichtrings. Bevorzugt sind das Kupplungselement und das Kupplungsgegenelement aus Metall, beispielsweise aus Messing. Auch eine Realisierung aus Stahl, insbesondere aus Edelstahl, oder aus Kunststoff, beispielsweise Polyamid, kann vorgesehen sein.

Zum Herstellen der dichten Fluidverbindung ist es zum einen notwendig, dass der Dichtring an dem Kupplungsgegenelement beziehungsweise dem weiteren Dichtring fest und durchgehend anliegt. Hierzu wird der Dichtring während des Koppelns des Kupplungselements mit dem Kupplungsgegenelement in axialer Richtung komprimiert. Um das Koppeln von Kupplungselement und Kupplungsgegenelement miteinander beziehungsweise das Ineingriffbringen der Kopplungsmittel mit den Kopplungsgegenmitteln zu erleichtern, ist der Dichtring zudem vorzugsweise drehbar in dem Kupplungskörper angeordnet. Dies ist insbesondere der Fall, falls das Koppeln mithilfe des Bajonettverschlusses erfolgt, welche das Drehen des Kupplungselements und des Kupplungsgegenelements relativ zueinander zum Herstellen der Verbindung zwischen den Kopplungsmitteln und den Kopplungsgegenmitteln voraussetzt.

Nach dem Koppeln des Kupplungselements und des Kupplungsgegenelements miteinander wird der Dichtring nicht nur an das Kupplungsgegenelement oder den weiteren Dichtring gedrängt, sondern zudem an die Wandfläche des Kupplungskörpers. Hierdurch wird verhindert, dass das durch das Kupplungselement strömende Fluid zwischen den Dichtring und die Wandfläche gelangt und den Dichtring von der Wandfläche fortdrängt. Hierdurch würde die Dichtheit der Fluidkupplung beeinträchtigt. Während das Kupplungselement mit dem Fluid beaufschlagt ist, liegt dieses mit einem bestimmten Fluiddruck in dem Kupplungselement vor. Entsprechend bewirkt es eine Fluidkraft auf den Dichtring, welche den Dichtring an die Wandfläche drängt. Hierdurch wird die Dichtheit der Fluidkupplung weiter verbessert.

Allerdings verhindert der Fluiddruck, insbesondere die von dem Fluiddruck auf den Dichtring bewirkte Fluidkraft, auch ein Lösen von Kupplungselement und Kupplungsgegenelement voneinander. Das bedeutet, dass für ein einfaches Lösen von Kupplungselement und Kupplungsgegenelement voneinander zunächst der Fluiddruck reduziert werden muss. Dies kann beispielsweise durch Unterbrechung einer Fluidzufuhr zu der Fluidkupplung einerseits und durch Freigeben einer Fluidabfuhr andererseits erfolgen, sodass das Fluid aus den Fluidleitungen und mithin der Fluidkupplung ablaufen kann und sich der Fluiddruck reduziert. Dies ist jedoch zeitaufwendig und umständlich.

Entsprechend soll die Möglichkeit geschaffen werden, das Kupplungselement auch ohne die genannten Maßnahmen zuverlässig und einfach von dem Kupplungsgegenelement lösen zu können. Hierzu verfügt das Kupplungselement über das Bedienelement, welches für eine manuelle Betätigung aus einer Außenumgebung des Kupplungselements angeordnet ist. Ein Benutzer der Fluidkupplung kann insoweit von außen an dem Kupplungselement angreifen und das Bedienelement betätigen. Das Bedienelement ist verlagerbar gelagert, ist also von dem Benutzer der Fluidkupplung in unterschiedlichen Stellungen anordenbar. In wenigstens einer seiner Stellungen, genauer gesagt in der wenigstens einen Stellung, ist das Bedienelement so angeordnet, dass es den Dichtring von der Wandfläche des Kupplungskörpers fortdrängt beziehungsweise es von der Wandfläche beabstandet.

Dies erfolgt insbesondere derart, dass das in dem Kupplungselement vorliegende Fluid, insbesondere das in dem von dem Dichtring begrenzten Fluidraum vorliegende Fluid, zwischen den Dichtring und die Wandfläche strömen kann. Hierdurch wird ein Druckausgleich zwischen gegenüberliegenden Seiten des Dichtrings hergestellt, sodass das Fluid auf die gegenüberliegenden Seiten identische oder zumindest ähnliche Fluidkräfte aufprägt. Entsprechend wird die Dichtheit der Fluidverbindung reduziert beziehungsweise gezielt die Undichtigkeit der Fluidverbindung hergestellt. Insbesondere liegt in der wenigstens einen Stellung des Bedienelements ein Strömungsweg für das Fluid an dem Dichtring vorbei vor, welcher den von dem Dichtring begrenzten Fluidraum mit der Außenumgebung verbindet. Entlang dieses Strömungswegs kann das Fluid aus dem Kupplungselement beziehungsweise der Fluidkupplung entweichen, sodass der Fluiddruck zumindest lokal in dem Kupplungselement beziehungsweise in der Fluidkupplung zumindest vorübergehend reduziert ist. Hierdurch ist ein einfaches Entkoppeln des Kupplungselements von dem Kupplungsgegenelement sichergestellt.

Eine Weiterbildung der Erfindung sieht vor, dass der Dichtring in dem Kupplungskörper drehbar gelagert ist. Die Drehbarkeit des Dichtrings stellt ein einfaches Koppeln und Entkoppeln des Kupplungselements mit beziehungsweise von dem Kupplungsgegenelement sicher. Um die Drehbarkeit zu erzielen, ist es beispielsweise vorgesehen, dass der Dichtring, insbesondere sein Grundkörper, mit Spiel in axialer Richtung in dem Kupplungselement angeordnet ist, nämlich in einer Dichtringaufnahme, die in dem Kupplungskörper vorliegt. Das bedeutet, dass der Dichtring oder zumindest sein Grundkörper in axialer Richtung bezüglich der Längsmittelachse des Kupplungskörpers beziehungsweise des Kupplungselements innerhalb des Spiels verlagerbar ist. Unter dem Kupplungskörper ist ein Grundkörper des Kupplungselements zu verstehen, welcher der Aufnahme des Dichtrings dient und mit den Kopplungsmitteln verbunden ist, insbesondere starr verbunden. Vorzugsweise gehen die Kopplungsmittel von dem Kupplungskörper aus. Die Dichtringaufnahme ist in axialer Richtung von einem Aufnahmeboden begrenzt, insbesondere auf ihrer dem Kupplungsgegenelement abgewandten Seite. Beispielsweise ist der Aufnahmeboden von dem Fluidkanal unter Ausbildung einer Mündungsöffnung durchgriffen, sodass der Fluidkanal durch die Mündungsöffnung in die Dichtringaufnahme einmündet.

Eine Weiterbildung der Erfindung sieht vor, dass der Dichtring in einer Dichtringaufnahme des Kupplungskörpers angeordnet ist, die in axialer Richtung bezüglich einer Längsmittelachse des Kupplungskörpers gesehen einerseits von einem von einem Fluidkanal durchgriffenen Aufnahmeboden begrenzt ist und andererseits eine Mündungsöffnung des Kupplungselements ausbildet. Die Dichtringaufnahme ist in dem Kupplungskörper hergestellt und zur Aufnahme des Dichtrings vorgesehen und ausgestaltet. Die Dichtringaufnahme ist in radialer Richtung bezüglich der Längsmittelachse nach außen von dem Kupplungskörper begrenzt, insbesondere in Umfangsrichtung durchgehend und vollständig. In axialer Richtung ist die Dichtringaufnahme einerseits von dem Aufnahmeboden begrenzt. Unter dem Aufnahmeboden ist eine Ringfläche zu verstehen, insbesondere eine plane Ringfläche, welche die Längsmittelachse vorzugweise vollständig und durchgehend umgreift.

Vorzugsweise liegt der Aufnahmeboden vollständig in einer gedachten Ebene, welche senkrecht auf der Längsmittelachse steht. Auch eine geneigte und/oder gekrümmte Ausgestaltung des Aufnahmebodens kann jedoch umgesetzt sein. Auf ihrer dem Aufnahmeboden in axialer Richtung gegenüberliegenden Seite ist die Dichtringaufnahme offen. Genauer gesagt bildet sie dort die Mündungsöffnung aus, über welche das Kupplungselement in Richtung des Kupplungsgegenelements bei bestimmungsgemäßer Anordnung offen ist. Vorzugsweise steht der Dichtring in axialer Richtung bei von dem Kupplungsgegenelement beabstandeter Anordnung des Kupplungselements über die Mündungsöffnung über, ragt also durch diese aus der Dichtringaufnahme heraus. Hierdurch ist ein zuverlässiger Dichtkontakt des Dichtrings mit dem weiteren Dichtring bei mit dem Kupplungsgegenelement verbundenem Kupplungselement sichergestellt.

Eine Weiterbildung der Erfindung sieht vor, dass der Dichtring einen Dichtungskörper aufweist, von welchem auf seiner dem Aufnahmeboden abgewandten Seite ein Dichtwulst ausgeht. Der Dichtwulst liegt nach dem Koppeln des Kupplungselements mit dem Kupplungsgegenelement an dem Kupplungsgegenelement beziehungsweise dem weiteren Dichtring, insbesondere an einem weiteren Dichtwulst des weiteren Dichtrings, dichtend an. Der Dichtring kann derart ausgestaltet sein, dass der Dichtwulst während des Koppelns in radialer Richtung nach innen elastisch ausgelenkt wird. In jedem Fall ist er ausgehend von dem Grundkörper in radialer Richtung nach innen geneigt. Hierdurch ist sichergestellt, dass der Dichtring im Zuge des Koppelns des Kupplungselements mit dem Kupplungsgegenelement zuverlässig in Dichtkontakt mit dem Kupplungsgegenelement beziehungsweise dem weiteren Dichtring gerät.

Eine Weiterbildung der Erfindung sieht vor, dass der Dichtungskörper des Dichtrings eine Dichtungsnut aufweist, in welche ein Kupplungskörpervorsprung des Kupplungskörpers in Richtung bezüglich der Längsmittelachse eingreift. Die Dichtungsnut ist in radialer Richtung gesehen außenseitig an dem Dichtring beziehungsweise dem Dichtungskörper hergestellt. Die Dichtungsnut ist im Schnitt gesehen beispielsweise in axialer Richtung auf gegenüberliegenden Seiten von zwei Seitenwänden begrenzt, in radialer Richtung nach innen von einer Bodenwand. Die Seitenwände sind jeweils bezüglich der Bodenwand angewinkelt, schließen mit dieser also einen Winkel von mehr als 0° und weniger als 180° ein. Beispielsweise stehen die Seitenwände jeweils in etwa oder genau senkrecht auf der Bodenwand. Vorzugsweise ist es vorgesehen, dass die Seitenwände jeweils über einen Radius in die Bodenwand übergehen. Die Dichtungsnut weist beispielsweise in axialer Richtung Abmessungen auf, welche mindestens 30 %, mindestens 40 % oder mindestens 50 % von Abmessungen des Dichtrings in derselben Richtung entsprechen, insbesondere in entspanntem Zustand des Dichtrings.

Von dem Kupplungskörper ausgehend erstreckt sich der Kupplungskörpervorsprung in radialer Richtung nach innen, also in Richtung des Dichtrings. Der Kupplungskörpervorsprung greift in die Dichtungsnut ein, um den Dichtring in axialer Richtung in der Dichtringaufnahme zu halten, insbesondere mit Spiel. In axialer Richtung ist der Kupplungskörpervorsprung auf gegenüberliegenden Seiten von zwei Wandflächen des Kupplungskörpers begrenzt. Im Schnitt gesehen liegen die beiden Wandflächen unter unterschiedlichen Winkeln bezüglich einer jeweils durch sie hindurch verlaufenden gedachten Ebene vor, die senkrecht auf der Längsmittelachse steht. Beispielsweise ist eine erste der Wandflächen vollständig in der gedachten Ebene angeordnet, wohingegen eine zweite der Wandflächen bezüglich der jeweiligen gedachten Ebene angewinkelt ist und insoweit als Schrägfläche vorliegt.

Die erste Wandfläche liegt vorzugsweise auf der der Mündungsöffnung abgewandten Seite des Kupplungskörpervorsprungs und die zweite Wandfläche auf der der Mündungsöffnung zugewandten Seite des Kupplungskörpervorsprung vor. Die beschriebene Ausgestaltung der Wandflächen hält aufgrund der Ausrichtung der ersten Wandfläche den Dichtring zuverlässig in der Dichtringaufnahme, wohingegen die zweite Wandfläche, welche vorzugsweise als Schrägfläche vorliegt, ein Hineindrängen des Dichtrings in die Dichtringaufnahme während des Koppelns des Kupplungselements mit dem Kupplungsgegenelement zulässt. Hierdurch ist ein zuverlässiges Halten des Dichtrings in der Dichtringaufnahme sichergestellt, wobei gleichzeitig die Verlagerbarkeit des Dichtrings in axialer Richtung mit Spiel umsetzbar ist.

Eine Weiterbildung der Erfindung sieht vor, dass die Dichtungsnut in axialer Richtung bezüglich der Längsmittelachse einerseits von einem ersten Dichtungsvorsprung und andererseits von einem zweiten Dichtungsvorsprung begrenzt ist, die von dem Dichtungskörper ausgehen, wobei der erste Dichtungsvorsprung und der zweite Dichtungsvorsprung den Kupplungskörpervorsprung des Kupplungskörpers umgreifen. Die beiden Dichtungsvorsprünge gehen jeweils in axialer Richtung nach außen von dem Dichtungskörper aus. Sie sind einstückig und materialeinheitlich mit dem Dichtungskörper hergestellt. Im Längsschnitt gesehen nehmen die beiden Dichtungsvorsprünge in den Kupplungskörpervorsprung in axialer Richtung zwischen sich auf, um den Dichtring in axialer Richtung zuverlässig in der Dichtringaufnahme zu halten. Anders ausgedrückt liegen sie auf gegenüberliegenden Seiten des Kupplungskörpervorsprungs vor.

Eine Weiterbildung der Erfindung sieht vor, dass der erste Dichtungsvorsprung in einer ersten Stellung des Dichtrings beabstandet von einer Schrägfläche des Kupplungskörpervorsprung des Kupplungskörpers angeordnet ist und in einer zweiten Stellung des Dichtrings dichtend an der Schrägfläche anliegt. Die Schrägfläche ist eine der Wandflächen des Kupplungskörpers, welche den Kupplungskörpervorsprung begrenzen, nämlich auf einer der Mündungsöffnung zugewandten Seite des Kupplungskörpervorsprungs. Es ist vorgesehen, dass der erste Dichtungsvorsprung aufgrund der Elastizität des Dichtrings in axialer Richtung in unterschiedlichen Stellungen bezüglich des Kupplungskörpers anordenbar ist.

Bei entspanntem Dichtring, also bei von dem Kupplungsgegenelement entfernt angeordnetem Kupplungselement, ist der erste Dichtungsvorsprung bevorzugt von der Schrägfläche beabstandet angeordnet, sodass er mit diesem nicht dichtend zusammenwirkt. In der zweiten Stellung des Dichtrings, welche vorzugsweise bei an dem Kupplungsgegenelement angeordneten Kupplungselement vorliegt, ist der Dichtring beziehungsweise sein erster Dichtungsvorsprung hingegen auf den Kupplungskörpervorsprung zu gedrängt, nämlich durch ein Zusammenwirken mit dem Kupplungsgegenelement beziehungsweise dem weiteren Dichtring. Hierdurch liegt der Dichtring dichtend an der Schrägfläche an, sodass eine besonders gute Dichtwirkung des Dichtrings erzielt ist.

Eine Weiterbildung der Erfindung sieht vor, dass von dem Dichtungskörper in Richtung bezüglich der Längsmittelachse Dichtungsstege ausgehen, die in tangentialer Richtung voneinander beabstandet sind und in axialer Richtung in den ersten Dichtungsvorsprung übergehen. Die Dichtungsstege stehen in radialer Richtung über den Dichtungskörper über, gehen also von diesem aus. Sie sind in tangentialer Richtung voneinander beabstandet, vorzugsweise sind sie über den Umfang des Dichtungskörpers gleichmäßig verteilt angeordnet. Beispielsweise sind wenigstens 7, wenigstens 8 oder wenigstens 11 derartige Dichtungsstege an dem Dichtungskörper hergestellt. Die Dichtungsstege gehen in axialer Richtung gesehen in den ersten Dichtungsvorsprung über. Anders formuliert gehen sie von dem ersten Dichtungsvorsprung aus und erstrecken sich in axialer Richtung von diesem fort.

Die Dichtungsstege weisen in axialer Richtung gesehen Abmessungen auf, welche mindestens 10 %, mindestens 15 % oder mindestens 20 % von Abmessungen des Dichtrings in derselben Richtung in entspanntem Zustand entsprechen. Die Dichtungsstege weisen vorzugsweise eine Höhe auf, also eine Erstreckung in radialer Richtung, mit welcher sie über den Kupplungskörper überstehen, welche in die von dem ersten Dichtungsvorsprung abgewandte Richtung abnehmen, insbesondere stetig beziehungsweise gleichmäßig abnehmen. Die Dichtungsstege liegen in wenigstens einer Stellung des ersten Dichtungsvorsprung an dem Kupplungskörpervorsprung an, vorzugsweise an dessen Schrägfläche. Mithilfe des Dichtungsvorsprungs ist eine von dem Dichtring auf das Kupplungsgegenelement beziehungsweise den weiteren Dichtring ausgeübte Gegenkraft einstellbar. Hierdurch ist eine gute Dichtwirkung der Fluidkupplung sichergestellt.

Eine Weiterbildung der Erfindung sieht vor, dass der zweite Dichtungsvorsprung in radialer Richtung bezüglich der Längsmittelachse in eine Kupplungskörpernut eingreift, die in axialer Richtung bezüglich der Längsmittelachse einerseits von dem Kupplungskörpervorsprung und andererseits von dem Aufnahmeboden oder einer von dem Aufnahmeboden in Axialrichtung beabstandeten Stützwand des Kupplungskörpers begrenzt ist. In axialer Richtung gesehen grenzt also an den Kupplungskörpervorsprung die Kupplungskörpernut an, wobei sie in axialer Richtung einerseits von dem Kupplungskörpervorsprung begrenzt ist. Auf ihrer dem Kupplungskörpervorsprung in axialer Richtung gegenüberliegenden Seite ist sie von dem Aufnahmeboden selbst oder von der Stützwand des Kupplungskörpers begrenzt. Die Stützwand ist beispielsweise durch eine Stufung des Aufnahmebodens ausgestaltet.

In die Kupplungskörpernut greift der zweite Dichtungsvorsprung ein, nämlich wiederum um den Dichtring in axialer Richtung in der Dichtringaufnahme formschlüssig zu halten. Der zweite Dichtungsvorsprung weist vorzugsweise Abmessungen in axialer Richtung auf, welche Abmessungen der Kupplungskörpernut in derselben Richtung entsprechen oder mindestens 80 %, mindestens 90 % oder mindestens 95 % der Abmessungen der Kupplungskörpernut betragen. Der zweite Dichtungsvorsprung füllt also die Kupplungskörpernut in axialer Richtung größtenteils oder überwiegend aus.

Vorzugsweise ist es vorgesehen, dass der zweite Dichtungsvorsprung in axialer Richtung gesehen einen sich verändernden Überstand über den Dichtungskörper aufweist. Insbesondere nehmen Außenabmessungen des Dichtrings über den zweiten Dichtungsvorsprung in axialer Richtung hinweg ab, nämlich in Richtung eines dem Aufnahmeboden zugewandten Ende des Dichtrings. Beispielsweise ist der zweite Dichtungsvorsprung auf seiner Außenseite hierzu geneigt und/oder gekrümmt ausgestaltet. Eine solche Ausgestaltung des zweiten Dichtungsvorsprung stellt eine einfache Drehbarkeit des Dichtrings in entspanntem Zustand des Dichtrings sicher. Ist der Dichtring hingegen mit dem Fluiddruck beaufschlagt, so wird der zweite Dichtungsvorsprung in die Kupplungskörpernut hineingedrängt, sodass er sich verformt und vorzugsweise die Kupplungskörpernut vollständig ausfüllt. Hierdurch wird die Dichtheit der Fluidkupplung weiter verbessert.

Eine Weiterbildung der Erfindung sieht vor, dass in die Kupplungskörpernut eine Führungsausnehmung einmündet, in welcher ein mit dem Bedienelement antriebstechnisch gekoppeltes Verlagerungselement linear verlagerbar gelagert ist, das in der wenigstens einen Stellung des Bedienelements den Dichtring aus der Kupplungskörpernut heraus drängt. Die Führungsausnehmung durchgreift den Kupplungskörper aus Richtung der Außenumgebung bis in die Führungsausnehmung vollständig. Beispielsweise ist die Führungsausnehmung im Querschnitt zumindest bereichsweise zylindrisch, vorzugweise kreiszylindrisch, ausgestaltet. Die Führungsausnehmung dient einer Lagerung des Verlagerungselements, genauer gesagt einer linearen Lagerung.

Das Verlagerungselement ist dazu vorgesehen und ausgestaltet, den Dichtring bei Vorliegen der mindestens einen Stellung des Bedienelements aus der Kupplungskörpernut heraus zu drängen. Beispielsweise wird hierzu das Verlagerungselement einerseits von dem Bedienelement mit einer Bedienkraft beaufschlagt und leitet diese Bedienkraft an den Dichtring weiter. Das Verlagerungselement ist derart gelagert, dass die Bedienkraft in radialer Richtung nach innen wirkt, insbesondere genau in radialer Richtung. Das bedeutet, dass eine Verlagerungsachse, entlang welcher das Verlagerungselement verlagerbar gelagert ist, die Längsmittelachse des Kupplungskörpers schneidet, insbesondere senkrecht auf ihr steht.

Es kann vorgesehen sein, dass das Verlagerungselement und das Bedienelement derart ausgestaltet sind, dass in der wenigstens einen Stellung des Bedienelements der Dichtring vollständig aus der Kupplungskörpernut herausgedrängt ist. Dies ist jedoch grundsätzlich nicht notwendig. Es kann insoweit auch vorgesehen sein, dass das Verlagerungselement bei Vorliegen der wenigstens einen Stellung des Bedienelements den Dichtring lediglich teilweise aus der Kupplungskörpernut heraus drängt. In jedem Fall wird gezielt eine Undichtigkeit geschaffen, über welche der in dem Kupplungselement vorliegende Fluiddruck abgebaut wird, insbesondere in Richtung der Außenumgebung. Aufgrund der sich hieraus ergebenden Reduzierung des Fluiddrucks ist das Kupplungselement einfach von dem Kupplungsgegenelement lösbar.

Eine Weiterbildung der Erfindung sieht vor, dass das Verlagerungselement in einer ringförmigen Dichtung geführt ist, die in der Führungsausnehmung angeordnet ist. Die Dichtung liegt vorzugsweise als O-Ring oder dergleichen vor. Sie umgreift das Verlagerungselement vollständig und liegt insbesondere über einen Umfang des Verlagerungselements hinweg vollständig und durchgehend dichtend an diesem an. Die Dichtung besteht beispielsweise aus einem Material, welches gute Gleiteigenschaften aufweist, sodass das Verlagerungselement leichtgängig in der Führungsausnehmung geführt ist.

Eine Weiterbildung der Erfindung sieht vor, dass das Bedienelement als ein außenseitig an dem Kupplungskörper um eine Drehachse drehbar gelagerte Bediengriff vorliegt, der zumindest in der wenigstens einen Stellung beabstandet von der Drehachse an den Verlagerungselement anliegt. Um eine einfache Bedienbarkeit des Bedienelements sicherzustellen, auch bei einer Verwendung von Handschuhen durch den Benutzer, ist das Bedienelement als Bediengriff ausgestaltet. Dieser ist um die Drehachse drehbar an dem Kupplungskörper gelagert. Vorzugsweise ist das Bedienelement federkraftbeaufschlagt, insbesondere greift zu diesem Zweck ein Federelement einerseits an dem Bedienelement und andererseits an dem Kupplungskörper an. Das Federelement liegt beispielsweise als Schenkelfeder vor. Das Federelement stellt ein zuverlässiges Zurückstellen des Bedienelements aus der wenigstens einen Stellung sicher.

Es kann vorgesehen sein, dass das Bedienelement an dem Verlagerungselement gelagert ist. Vorzugsweise liegt das Bedienelement jedoch lediglich zeitweise an den Verlagerungselement an. Während also das Bedienelement mithilfe des Federelements mit einer Rückstellkraft beaufschlagt ist, welche es aus der wenigstens einen Stellung in seine Ausgangsstellung drängt, wird eine äquivalente Rückstellkraft auf das Verlagerungselement lediglich von dem Dichtring erzielt. Wird das Bedienelement aus der wenigstens einen Stellung in die Ausgangsstellung zurück verlagert, kann es somit vorkommen, dass es zeitweise von dem Betätigungselement beabstandet ist. Erst mit der Zeit wird das Betätigungselement aufgrund der Elastizität des Dichtrings in radialer Richtung nach außen gedrängt, sodass es erneut in Anlagekontakt mit dem Bedienelement gerät. Mit einer solchen Ausgestaltung des Kupplungselements werden die bereits geschilderten Vorteile erreicht.

Eine Weiterbildung der Erfindung sieht vor, dass das Bedienelement zwischen zwei in axialer Richtung bezüglich der Drehachse voneinander beabstandeten Lagerwangen angeordnet und an diesen gelagert ist, wobei die Lagerwangen über den Kupplungskörper in radialer Richtung bezüglich der Längsmittelachse nach außen überstehen. Die Lagerwangen sind vorzugsweise beabstandet parallel beabstandet zueinander angeordnet und nehmen das Bedienelement in axialer Richtung bezüglich der Drehachse zwischen sich auf. Die Lagerwangen schließen bevorzugt in der Ausgangsstellung des Bedienelements bündig mit dem Bedienelement ab oder stehen zumindest bereichsweise oder durchgehend in radialer Richtung über das Bedienelement über. Hierdurch wird eine Fehlbetätigung des Bedienelements und damit ein ungewolltes Hersteller der Undichtigkeit der Fluidkupplung zuverlässig vermieden.

Die Erfindung betrifft weiterhin eine Fluidkupplung mit einem Kupplungselement, insbesondere einem Kupplungselement gemäß den Erläuterungen im Rahmen dieser Beschreibung, und mit einem Kupplungsgegenelement, wobei das Kupplungselement über Kopplungsmittel zum reversiblen Koppeln des Kupplungselements mit dem Kupplungsgegenelement der Fluidkupplung und über einen in einem Kupplungskörper des Kupplungselements angeordneten Dichtring zur Abdichtung einer Fluidverbindung bei mit dem Kupplungsgegenelement gekoppeltem Kupplungselement verfügt, wobei der Dichtring zumindest zeitweise an einer Wandfläche des Kupplungskörpers dichtend anliegt. Dabei ist vorgesehen, dass an dem Kupplungskörper ein Bedienelement verlagerbar gelagert ist, das in mindestens einer Stellung den Dichtring zur Herstellung einer Undichtigkeit der Fluidverbindung von der Wandfläche des Kupplungskörpers fort drängt.

Auf die Vorteile einer derartigen Ausgestaltung der Fluidkupplung beziehungsweise des Kupplungselements wurde bereits hingewiesen. Sowohl die Fluidkupplung als auch das Kupplungselement können gemäß den Ausführungen im Rahmen dieser Beschreibung weitergebildet sein, sodass insoweit auf diese verwiesen wird.

Eine Weiterbildung der Erfindung sieht vor, dass das Kupplungsgegenelement über Kopplungsgegenmittel zum reversiblen Koppeln des Kupplungsgegenelements mit dem Kupplungselement der Fluidkupplung verfügt, wobei der Dichtring ein erster Dichtring mehrerer identischer Dichtringe ist und ein zweiter der Dichtringe in einem Kupplungskörper des Kupplungsgegenelements angeordnet ist, insbesondere drehbar angeordnet ist. Vorzugsweise ist also das Kupplungsgegenelement analog zu dem Kupplungselement ausgestaltet, wobei das Kupplungselement über die Kopplungsmittel und das Kupplungsgegenelement über die Kopplungsgegenmittel verfügt. Die Ausführungen hinsichtlich des Kupplungselements sind soweit technisch sinnvoll auf das Kupplungsgegenelement übertragbar. Insgesamt ergibt sich somit eine Fluidkupplung, welche sich durch hohe Dichtheit und einfache Bedienbarkeit auszeichnet.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung, insbesondere den Rahmen der Ansprüche, zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind, insbesondere im Rahmen der Ansprüche.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung eines Kupplungselements für eine Fluidkupplung, sowie
- Figur 2: eine schematische Teilschnittdarstellung des Kupplungselements.

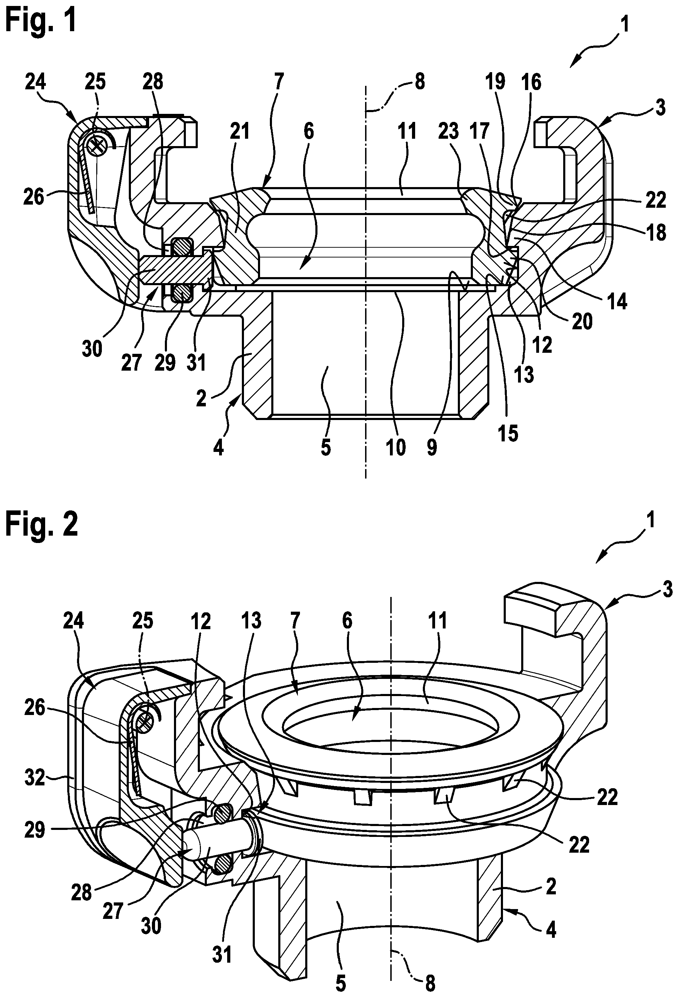

Die Figur 1 zeigt eine Längsschnittdarstellung durch ein Kupplungselement 1 für eine Fluidkupplung. Das Kupplungselement 1 weist einen Kupplungskörper 2 auf, von welchem Kopplungsmittel 3 zum Koppeln des Kupplungselements 1 mit einem hier nicht dargestellten Kupplungsgegenelement ausgehen. An dem Kupplungskörper 2 ist ein Fluidanschluss 4 zum Anschließen einer Fluidleitung vorgesehen und ausgestaltet. In dem hier dargestellten Ausführungsbeispiel verfügt der Fluidanschluss 4 über ein Außengewinde, über welches die Fluidleitung mit dem Kupplungselement 1 beziehungsweise seinem Kupplungskörper 2 verbindbar ist.

Weiterhin ist in dem Kupplungskörper 2 ein Fluidkanal 5 ausgestaltet, welcher Bestandteil des Fluidanschlusses ist. Bei an dem Kupplungselement 1 befestigter Fluidleitung steht diese in Strömungsverbindung mit dem Fluidkanal 5. Der Fluidkanal 5 mündet in dem Kupplungskörper 2 in eine Dichtringaufnahme 6 ein, in welcher ein Dichtring 7 angeordnet ist. Die Dichtringaufnahme 6 ist in axialer Richtung bezüglich einer Längsmittelachse 8 des Kupplungskörpers 2 von einem Aufnahmeboden 9 begrenzt. Der Aufnahmeboden 9 ist vorzugsweise von dem Fluidkanal 5 unter Ausbildung einer Mündungsöffnung 10 durchgriffen.

Auf der dem Aufnahmeboden 9 in axialer Richtung gegenüberliegenden Seite der Dichtringaufnahme 6 weist diese eine weitere Mündungsöffnung 11 auf, über welche sie bei nicht mit dem Kupplungsgegenelement gekoppeltem Kupplungselement 1 in die Außenumgebung einmündet. In radialer Richtung nach außen ist die Dichtungsaufnahme 6 zumindest bereichsweise von einer Wandfläche 12 begrenzt. In dem dargestellten Ausführungsbeispiel ist die Wandfläche 12 in einer Kupplungskörpernut 13 angeordnet, die in axialer Richtung gesehen einerseits von einem Kupplungskörpervorsprung 14 und andererseits von dem Aufnahmeboden 9 oder, wie hier dargestellt, von einer Stützwand 15 begrenzt ist.

Es ist erkennbar, dass der Kupplungskörpervorsprung 14 in axialer Richtung von einer ersten Wandfläche 16 und andererseits von einer zweiten Wandfläche 17 begrenzt ist. Die erste Wandfläche 16 ist hierbei als Schrägfläche ausgestaltet, sie ist insoweit bezüglich einer senkrecht auf der Längsmittelachse 8 stehenden gedachten Ebene angewinkelt, schließt mit dieser also einen Winkel ein, welcher größer als 0° und kleiner als 180° ist. Vorzugweise beträgt der Winkel mindestens 15° und und höchstens 75°, mindestens 30° und höchstens 60° oder in etwa oder genau 45°.

Der Kupplungskörpervorsprung 14 greift in eine Dichtungsnut 18 ein, die in axialer Richtung auf gegenüberliegenden Seiten von einem ersten Dichtungsvorsprung 19 und einem zweiten Dichtungsvorsprung 20 begrenzt ist. Die Dichtungsvorsprünge 19 und 20 gehen von einem Dichtungskörper 21 aus. Es ist erkennbar, dass von dem Dichtungskörper 21 in radialer Richtung nach außen Dichtungsstege 22 ausgehen, die in axialer Richtung in den ersten Dichtungsvorsprung 19 übergehen. Weiterhin geht von dem Dichtungskörper 21 ein Dichtwulst 23 aus, welcher einem dichtenden Zusammenwirken mit dem Kupplungsgegenelement beziehungsweise einem weiteren Dichtring des Kupplungsgegenelements dient.

Um ein einfaches Lösen des Kupplungselements von dem Kupplungsgegenelement zu ermöglichen, ist das Kupplungselement 1 dazu vorgesehen und ausgestaltet, einen in ihm vorliegenden Fluiddruck einfach und effizient abzubauen. Zu diesem Zweck ist an dem Kupplungskörper 2 ein Bedienelement 24 verlagerbar gelagert. In dem dargestellten Ausführungsbeispiel ist das Bedienelement 24 als Bediengriff ausgeführt, welcher um eine Drehachse 25 drehbar gelagert ist. Das Bedienelement 24 ist hier in einer Ausgangsstellung dargestellt. In diese wird es von einem Federelement 26 gedrängt, welches hierzu einerseits an dem Bedienelement 24 und andererseits an dem Kupplungskörper 2 angreift.

Das Bedienelement 24 wirkt mit einem Verlagerungselement 27 zusammen, welches entlang einer Verlagerungsachse linear verlagerbar geführt ist, nämlich in einer Führungsausnehmung 28, die in dem Kupplungskörper 2 hergestellt ist. Vorzugsweise ist in der Führungsausnehmung 28 eine ringförmige Dichtung 29 angeordnet, welche ein Entweichen von Fluid aus dem Kupplungselement 1 durch die Führungsausnehmung 28 hindurch unterbindet oder zumindest weitgehend unterbindet. Das Verlagerungselement 27 weist einen Grundkörper 30 auf, der antriebstechnisch mit dem Bedienelement 24 zusammenwirkt. Auf seiner dem Bedienelement 24 abgewandten Seite weist das Verlagerungselement 27 einen Kopf 31 auf, der in radialer Richtung bezüglich einer Längsmittelachse des Verlagerungselements 27 über den Grundkörper 30 übersteht. Die Führungsausnehmung 28 mündet, wie hier dargestellt, in die Kupplungskörpernut 13 ein.

Bei einer Betätigung des Bedienelements 24 durch einen Benutzer wird das Bedienelement 24 aus seiner Ausgangsstellung in eine Betätigungsstellung verlagert. In der Betätigungsstellung drängt das Bedienelement 24 das Verlagerungselement 27 in die Kupplungskörpernut 13 hinein, sodass es den Dichtring 7 zumindest teilweise in radialer Richtung nach innen aus dieser heraus drängt. Hierdurch wird der Dichtring 7 von der Wandfläche 12 fortgedrängt und so eine gezielte Undichtigkeit der über das Kupplungselement 1 hergestellten Fluidverbindung bewirkt. Diese führt zu einem Absinken des in dem Kupplungselement 1 vorliegenden Fluiddrucks, sodass das Kupplungselement 1 einfach von dem Kupplungsgegenelement entkoppelt werden kann.

Die Figur 2 zeigt eine schematische Darstellung des Kupplungselements 1 in teilgeschnittener Ansicht. Es wird vollumfänglich auf die vorstehenden Erläuterungen verwiesen. Zusätzlich ist nun erkennbar, dass die Dichtungsstege 22 in Umfangsrichtung bezüglich der Längsmittelachse 8 gleichmäßig beabstandet voneinander angeordnet, also gleichmäßig über den Umfang des Dichtrings 7 verteilt angeordnet sind. Erkennbar ist weiterhin, dass das Bedienelement 24 zwischen zwei Lagerwangen 32 angeordnet ist, von welchen hier lediglich eine dargestellt ist. Die beiden Lagerwangen 32 nehmen das Bedienelement 24 zwischen sich auf. Sie dienen zum einen einer Lagerung des Bedienelements 24 um die Drehachse 25 und zum anderen verhindern sie eine unbeabsichtigte Betätigung des Bedienelements 24.

### BEZUGSZEICHENLISTE

- 1: Kupplungselement
- 2: Kupplungskörper
- 3: Kopplungsmittel
- 4: Fluidanschluss
- 5: Fluidkanal
- 6: Dichtringaufnahme
- 7: Dichtring
- 8: Längsmittelachse
- 9: Aufnahmeboden
- 10: Mündungsöffnung
- 11: Mündungsöffnung
- 12: Wandfläche
- 13: Kupplungskörpernut
- 14: Kupplungskörpervorsprung
- 15: Stützwand
- 16: 1. Wandfläche
- 17: 2. Wandfläche
- 18: Dichtungsnut
- 19: 1. Dichtungsvorsprung
- 20: 2. Dichtungsvorsprung
- 21: Dichtungskörper
- 22: Dichtungssteg
- 23: Dichtwulst
- 24: Bedienelement
- 25: Drehachse
- 26: Federelement
- 27: Verlagerungselement
- 28: Führungsausnehmung
- 29: Dichtung
- 30: Grundkörper
- 31: Kopf
- 32: Lagerwange

## Patentansprüche

1. Kupplungselement (1) für eine Fluidkupplung, mit Kopplungsmitteln (3) zum reversiblen Koppeln des Kupplungselements (1) mit einem Kupplungsgegenelement der Fluidkupplung und mit einem in einem Kupplungskörper (2) des Kupplungselements (1) angeordneten Dichtring (7) zur Abdichtung einer Fluidverbindung bei mit dem Kupplungsgegenelement gekoppeltem Kupplungselement (1), wobei der Dichtring (7) zumindest zeitweise an einer Wandfläche (12) des Kupplungskörpers (2) dichtend anliegt, **dadurch gekennzeichnet, dass** an dem Kupplungskörper (2) ein Bedienelement (24) verlagerbar gelagert ist, das in mindestens einer Stellung den Dichtring (7) zur Herstellung einer Undichtigkeit der Fluidverbindung von der Wandfläche (12) des Kupplungskörpers (2) fortdrängt.

2. Kupplungselement nach Anspruch 1, **dadurch gekennzeichnet, dass** der Dichtring (7) in dem Kupplungskörper (2) drehbar gelagert ist.

3. Kupplungselement nach einem der vorhergehenden Ansprüche, **dadurch gekennzeichnet, dass** der Dichtring (7) in einer Dichtringaufnahme (6) des Kupplungskörpers (2) angeordnet ist, die in axialer Richtung bezüglich einer Längsmittelachse (8) des Kupplungskörpers (2) gesehen einerseits von einem von einem Fluidkanal (5) durchgriffenen Aufnahmeboden (9) begrenzt ist und andererseits eine Mündungsöffnung (11) des Kupplungselements (1) ausbildet.

4. Kupplungselement nach einem der vorhergehenden Ansprüche, **dadurch gekennzeichnet, dass** der Dichtring (7) einen Dichtungskörper (21) aufweist, von welchem auf seiner dem Aufnahmeboden (9) abgewandten Seite eine Dichtwulst (23) ausgeht.

5. Kupplungselement nach einem der vorhergehenden Ansprüche, **dadurch gekennzeichnet, dass** der Dichtungskörper (21) des Dichtrings (7) eine Dichtungsnut (18) aufweist, in welcher ein Kupplungskörpervorsprung (14) des Kupplungskörpers (2) in radialer Richtung bezüglich der Längsmittelachse (8) eingreift.

6. Kupplungselement nach einem der vorhergehenden Ansprüche, **dadurch gekennzeichnet, dass** die Dichtungsnut (18) in axialer Richtung bezüglich der Längsmittelachse (8) einerseits von einem ersten Dichtungsvorsprung (19) und andererseits von einem zweiten Dichtungsvorsprung (20) begrenzt ist, die von dem Dichtungskörper (21) ausgehen, wobei der erste Dichtungsvorsprung (19) und der zweite Dichtungsvorsprung (20) den Kupplungskörpervorsprung (14) des Kupplungskörpers (2) umgreifen.

7. Kupplungselement nach einem der vorhergehenden Ansprüche, **dadurch gekennzeichnet, dass** der erste Dichtungsvorsprung (19) in einer ersten Stellung des Dichtrings (7) beabstandet von einer Schrägfläche des Kupplungskörpervorsprungs (14) des Kupplungskörpers (2) angeordnet ist und in einer zweiten Stellung des Dichtrings (7) dichtend an der Schrägfläche anliegt.

8. Kupplungselement nach einem der vorhergehenden Ansprüche, **dadurch gekennzeichnet, dass** von dem Dichtungskörper (21) in radialer Richtung bezüglich der Längsmittelachse (8) Dichtungsstege (22) ausgehen, die in tangentialer Richtung voneinander beabstandet sind und in axialer Richtung in den ersten Dichtungsvorsprung (19) übergehen.

9. Kupplungselement nach einem der vorhergehenden Ansprüche, **dadurch gekennzeichnet, dass** der zweite Dichtungsvorsprung (20) in radialer Richtung bezüglich der Längsmittelachse (8) in eine Kupplungskörpernut (13) eingreift, die in axialer Richtung bezüglich der Längsmittelachse (8) einerseits von dem Kupplungskörpervorsprung (14) und andererseits von dem Aufnahmeboden (9) oder einer von dem Aufnahmeboden (9) in axialer Richtung beabstandeten Stützwand (15) des Kupplungskörpers (2) begrenzt ist.

10. Kupplungselement nach einem der vorhergehenden Ansprüche, **dadurch gekennzeichnet, dass** in die Kupplungskörpernut (13) eine Führungsausnehmung (28) einmündet, in welcher ein mit dem Bedienelement (24) antriebstechnisch gekoppeltes Verlagerungselement (27) linear verlagerbar gelagert ist, das in der wenigstens einen Stellung des Bedienelements (24) den Dichtring (7) aus der Kupplungskörpernut (13) herausdrängt.

11. Kupplungselement nach einem der vorhergehenden Ansprüche, **dadurch gekennzeichnet, dass** das Verlagerungselement (27) einen in der Führungsausnehmung (28) gelagerten Grundkörper (30) aufweist, von welchem ein Kopf (31) ausgeht, der im Schnitt gesehen größere Abmessungen aufweist als die Führungsausnehmung (28), sodass das Verlagerungselement (27) von dem Dichtring (7) in der Kupplungskörpernut (13) gehalten ist.

12. Kupplungselement nach einem der vorhergehenden Ansprüche, **dadurch gekennzeichnet, dass** das Verlagerungselement (27) in einer ringförmigen Dichtung (29) geführt ist, die in der Führungsausnehmung (28) angeordnet ist.

13. Kupplungselement nach einem der vorhergehenden Ansprüche, **dadurch gekennzeichnet, dass** das Bedienelement (24) als ein außenseitig an dem Kupplungskörper (2) um eine Drehachse (25) drehbar gelagerter Bediengriff vorliegt, der zumindest in der wenigstens einen Stellung beabstandet von der Drehachse (24) an dem Verlagerungselement (27) anliegt.

14. Kupplungselement nach einem der vorhergehenden Ansprüche, **dadurch gekennzeichnet, dass** das Bedienelement (24) zwischen zwei in axialer Richtung bezüglich der Drehachse (24) voneinander beabstandeten Lagerwangen (32) angeordnet und an diesen gelagert ist, wobei die Lagerwangen (32) über den Kupplungskörper (2) in radialer Richtung bezüglich der Längsmittelachse (8) nach außen überstehen.

15. Fluidkupplung mit einem Kupplungselement (1), insbesondere einem Kupplungselement (1) nach einem oder mehreren der vorhergehenden Ansprüche, und mit einem Kupplungsgegenelement, wobei das Kupplungselement (1) über Kopplungsmittel (3) zum reversiblen Koppeln des Kupplungselements (1) mit dem Kupplungsgegenelement der Fluidkupplung und über einen in einem Kupplungskörper (2) des Kupplungselements (1) angeordneten Dichtring (7) zur Abdichtung einer Fluidverbindung bei mit dem Kupplungsgegenelement gekoppeltem Kupplungselement (1) verfügt, wobei der Dichtring (7) zumindest zeitweise an einer Wandfläche (12) des Kupplungskörpers (2) dichtend anliegt, **dadurch gekennzeichnet, dass** an dem Kupplungskörper (2) ein Bedienelement (24) verlagerbar gelagert ist, das in wenigstens einer Stellung den Dichtring (7) zur Herstellung einer Undichtigkeit der Fluidverbindung von der Wandfläche (12) des Kupplungskörpers (2) fortdrängt.
